Europäisches Patentamt

European Patent Office

Office européen des brevets

(11) Publication number: **0 176 120**
A1

# (12) EUROPEAN PATENT APPLICATION

(21) Application number: **85201317.6**

(22) Date of filing: **16.08.85**

(51) Int. Cl.⁴: **A 01 K 11/00**
**G 09 F 3/03, G 06 K 19/08**

(30) Priority: **01.09.84 NL 8402673**

(43) Date of publication of application:
**02.04.86 Bulletin 86/14**

(84) Designated Contracting States:
**CH DE FR GB IT LI NL**

(71) Applicant: **Niemeijer, Halbe Jacobus**
**Hoogeveenseweg 21**
**NL-9435 TC Bruntinge(NL)**

(72) Inventor: **Niemeijer, Halbe Jacobus**
**Hoogeveenseweg 21**
**NL-9435 TC Bruntinge(NL)**

(54) **Marking seal.**

(57) A marking seal for marking objects comprises a sealing member (1) having a plate-shaped marking element (12) provided with at least one depressed, visually readable mark. The marking element (12) has a plurality of identification cavities (31) arranged in a matrix, said matrix of cavities (31) being characteristic of the mark concerned and being mechanically readable by means of a reading member.

FIG. 1

EP 0 176 120 A1

"Marking seal".


The invention relates to a marking seal for marking objects, comprising a seal member having a plate-shaped marking element provided with at least one visually readable mark depressed with respect to the surface.

A marking seal of the kind set forth is known from Dutch Patent Application 8104082 laid open for public inspection and serves to mark objects of greatly different kinds. The known marking seal may be used as an ear mark of animals, but also as a seal for identifying objects such as postal bags, containers and gasmeters. It is then possible to read the mark visually and to readily identify the object. Reading the mark will usually not give rise to difficulties directly after the seal has been applied. However, if after some time fouling or wear of the mark occurs, the mark may become blurred so that errors are likely to occur in reading. This problem is in particular encountered in seals having, as usual, a plurality of signs. For that matter in the case of a large number of signs an error may readily occur in reading directly after the marks have been applied, particularly when a large amount of marking seals have to be processed within a short time.

The conventional marks are less appropriate for mechanical reading, since the marks may readily become blurred as stated above.

The invention has for its object to render a marking seal of the kind set forth optimally suitable for mechanical reading, whilst maintaining the possibility of visual reading.

The invention is characterized in that the marking element has a plurality of identifying cavities arranged in the form of a matrix, said matrix of identifying cavities being characteristic of the mark concerned,

which can be mechanically read by means of a reading member.

In this way a reading member, which is preferably coupled with a computer, can rapidly and reliably read the matrix of identifying cavities and thus assess the mark. This can be done independently of fouling and/or wear of the mark, independently of the quantity of marks of the marking element and independently of the amount of marking seals to be read sequentially. Therefore, the marking seal embodying the invention is particularly suitable for those cases in which a reliable identification of large amounts of marking seals is desired. An example thereof is the identification of animals in slaughter houses with the aid of ear marks. The marking seal embodying the invention can be manufactured in a simple manner also because a slight adaptation of the conventional numerator wheels used for applying marks will be sufficient.

A preferred embodiment of a marking seal in accordance with the invention is characterized in that a mark is formed by a plurality of line parts provided with the identifying cavities. The arrangement of the identifying cavities on the lines of the mark means that the cavities do not occupy additional space on the marking element so that the marking element may have a limited surface. Moreover, making the cavities in the marking element can be further simplified. Preferably the mark is also formed by a matrix.

A further preferred embodiment of a marking seal in accordance with the invention, is characterized in that each identifying cavity is filled with lacquer. Since the lacquer may be transparent, the cavity can be effectively read even if the mark has been fouled.

A further preferred embodiment of the marking seal in accordance with the invention is characterized in that the identifying cavities extend in the marking element to a greater depth from the surface than the line parts. This greater depth ensures a clear distinction between the cavities and the surrounding line parts of the mark.

With regard thereto a preferred embodiment of a marking seal in accordance with the invention, is furthermore characterized in that a surface-contrasting and/or reflecting substance is provided on the bottom of each identifying cavity. By applying a readily identifiable substance to the bottom of the relatively deep cavity an optimum possibility is obtained for mechanically reading the matrix of the cavities.

A preferred embodiment of a marking seal in accordance with the invention is furthermore characterized in that the identifying cavities are arranged in a 3 x 5 matrix. Such a matrix of cavities can be readily applied to the marking element, whilst it has been found that this array can also be effectively read by mechanical agency.

The invention will be described more fully with reference to an embodiment illustrated in the drawing, to which the invention is, however, not limited.

Fig. 1 is an elevational view of a marking seal embodying the invention in a closed position.

Fig. 2 is a sectional view taken on the lines II-II in Fig. 1.

Fig. 2A shows on an enlarged scale part of the sectional view of Fig. 2.

Fig. 3 is a sectional view taken on the lines III-III in Fig. 1.

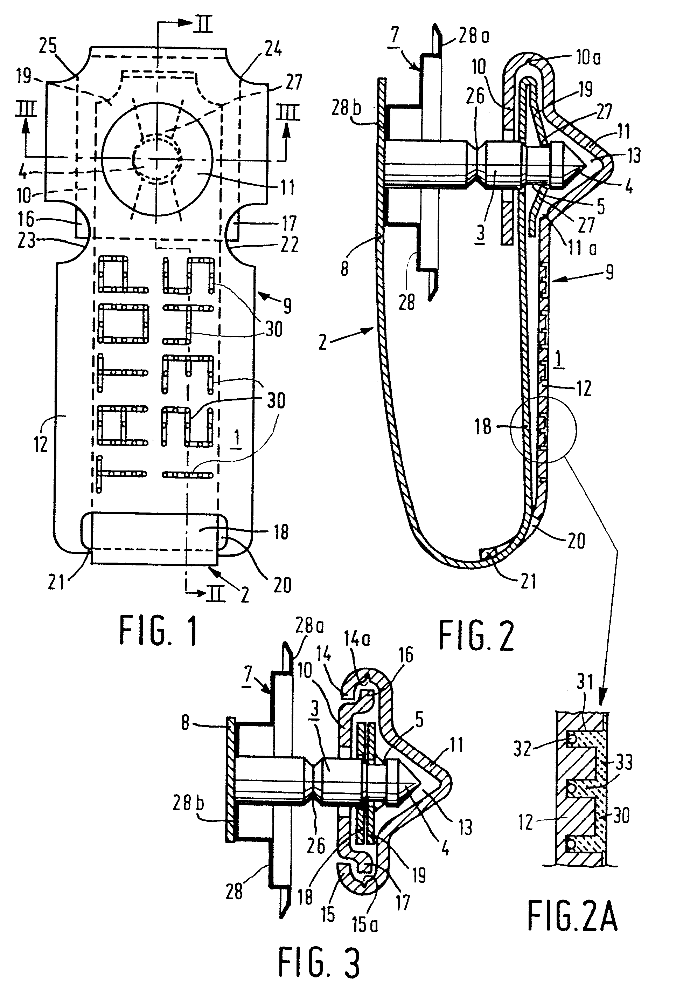

The marking seal shown in Figs. 1 and 2 comprises a marking member 1, a spring steel bracket 2 and a fixing pin 3. The galvanized fixing steel pin 3 has at one end a punctiform, preferably conical end part 4. In the vicinity of the end part 4 the pin has a continuous groove 5 adjoined by a cylindrical main part 6 of the pin. The main part 6 has a locally weakened part 26, where breakdown occurs when a force is exerted on the pin in an attempt to open the marking seal. Preferably, the part 26 is located approximately halfway the length of the pin 3. At the end remote from the end part 4 the pin 3 is connected by a welding joint with a first limb 8 of the bracket 2, said limb 8 forming a counterelement of the marking seal.

The pin 3 is concentrically surrounded by a pressing element 7 formed by an annular plate 28. The plate 28 has a stepped profile and a circumferential rim 28a of the plate 28 is slightly bent back. The end part 28b has the smallest diameter of the parts of the plate 28 and is preferably in contact with the limb 8. The plate 28 is preferably made from a synthetic resin and is elastic because of the stepped profile.

The sealing member 1 comprises a main plate 9 and a closing plate 10, said plates being integrally made from relatively soft sheet material, in this embodiment aluminium by bending over through about 180°. The main plate 9 comprises a fastening part 11 and an elongate main part 12 forming a marking element of the marking seal, to which are applied visually readable marks for identifying and/or checking purposes. Fig. 1 shows a plurality of such marks to be described more fully hereinafter. The number and shape of these marks depends on the nature of the object to be marked and on the kind of identification. For example, the mark may have an array of letters and/or ciphers or only a single sign may be used.

The fastening part 11 is completely closed and has a conical bulging part by which the fastening part bounds one side of a space 13 intended for receiving the end part 4 of the pin 3. Preferably the conical shape of the bulging part matches the shape of the end part 4 so that a fitting enclosure of the end part 4 can be obtained.

As shown in Fig. 3, side rims 14 and 15 of the main plate are bent over around side rims 16 and 17 of the closing plate 10, the rims 16 and 17 being bent with respect to the main surface so that the main surface is located at a given distance from the part 11 of the main plate 9. Thus the dimensions of the space 13 are sufficient for slipping in a second limb 18 of the bracket 2 together with a clamping plate 19. The clamping plate 19 has in a central part resilient clamping rims 27, which together constitute a clamping means for the pin 3. By folding over through about 180°, the clamping plate is formed from the second limb 18. Preferably the clamping plate is located on the outer side of the limb 18.

The seal member 1 is arranged on the second limb 18 by sliding the limb through a slot-shaped opening 20 in an inclined end part 21 of the main plate 9. By sliding the limb 18 subsequently into the space 13 the clamping plate 19 is located in said space. Thus the limb 18 constitutes a supporting element for the seal member 1. In the mounted state the main part 12 is adjacent the limb 18. The resiliently pivotable limbs 8 and 18 ensure that the pin 3 with the end part 4 is spaced from the closing plate 10.

For applying the marking seal embodying the invention the pin 3 is forced by means of suitable pincers across the relevant part of the object to be marked, for example, the ear of an animal, after which the end part 4 is pressed into the space 13 through an opening in the closing plate 10. Thus part of the object gets located between the limb 8 and the closing plate 10. In the space 13 the end part 4 can move through a passage in the limb 18 of the bracket 2. Then, when passing along the clamping plate 19 the clamping rims 27 bent over in the direction of the fastening part 11 and get located in the groove 5 so that withdrawal of the pin 3 becomes impossible without visible damage of the marking seal.

The bent-over rims 14 and 15 of the main plate 9 cannot be disengaged from the closing plate 10 without visible deformations caused, for example, by grinding. Owing to the presence of incisions 14a and 15a, respectively (see Fig. 3) in the junction of the rims with the fastening part 11, any attempt of bending back the rims 14 and 15 will result in breaking off of these rims. Such incisions 10a and 11a, respectively in the junction of the plate 10 with the part 11 and of the part 11 with the main part 12 render any attempt of opening the space 13 useless, since this would directly result in rupture of the parts concerned. The recesses 22, 23, 24 and 25 in the main plate 9 near the rims 14 and 15 contribute not only to the possibility of accurately bending over the rims 14 and 15, but also to the detectability of said deformations of the rims 14 and 15. Through the recesses 22 and 23, when the marking seal is applied, the ends of the rims 17 and 16, respectively are directly perceptible so that it can be checked whether the closing plate 10 is still present (see Fig. 1).

With the mode of clamping of the punctiform end part in the closed space 13 when the marking seal is closed, it is ensured that a marking seal once used cannot be reused. Thus the marking seal provides a very reliable possibility of identifying objects and an adequate protection against fraudulent manipulations of these objects.

The pressing element 7 enables the marking seal to effectively match the thickness of the relevant part of the object, for example, the ear of an animal to be marked. The clearance between the surface of the animal's ear and the seal is filled out by the element 7 so that thanks to the elastic properties of the pressing part 28 the bent-over circumferential rim 28a remains in constant contact with the ear so that the marking seal remains satisfactorily in its position. Damage of the part of the object carrying the marking seal is thus avoided.

The marks are made in the main part 12 by punching them in the relatively weak material of the main part. Thus slightly depressed line parts 30 are obtained in the surface of the main part 12. These line parts are preferably at right angles or parallel to one another so that the line parts form a matrix pattern. In the line parts 30 are located identification cavities 31 extending from the surface of the main part 12 preferably over a greater depth than the line parts 30 (Fig. 2A). The cavities 31 form a matrix which in a given mark is characteristic of the seal concerned. It should be noted that preferably the cavities are located in the line parts, since for their application it is easy to use the conventional numerator wheels provided with an additional stamp for making the cavities. Thus the cavities do not require additional space in the surface of the main part 12. As an alternative, the matrix of cavities 31 may be applied at a plate laterally of or inside the mark.

Directly after the formation of the cavities 31 a contrasting and/or reflecting substance 32 may be applied to the bottom thereof. This substance may be formed by granular iron, but other substances are also applicable. Then the cavities 31 and the line parts 30 are covered with lacquer, preferably a transparent lacquer. Owing to the lacquer, the cavities 31 cannot become unrecognizable during the use of the marking seal due to fouling or wear. The lacquer may furthermore be applied beyond the cavities and the line parts in a thin layer to the surface of the main part 12.

In the presence of an array of cavities 31 preferably forming a 3 x 5 matrix, which is characteristic of the mark concerned, it is possible to asses the mark of the marking seal embodying the invention by means of a reading member. This can be advantageously carried out by coupling the reading member to a microprocessor, which can, in addition, store and process the data read. The reading member may be an appropriate video camera in which the read matrix of cavities is converted through an electronic circuit into digital information and applied to the microprocessor. When such a camera is used, a contrasting and/or reflecting substance 32 can favourably influence the readability. It is advantageous to use a camera having an infrared-sensitive pcik-up tube. As an alternative the matrix of cavities may be scanned by means of a laser beam, in which case scratches, dirt and so on on the surface cannot have any disturbing effect. In reading it may be advantageous to use the lateral rims of the main part 12 as positioning means in order to obtain satisfactory positioning of the marking seal with respect to the camera.

It is furthermore advantageous to apply a magnetically orientated substance to the bottom of a cavity so that the cavity matrix can be read with the aid of a magnetic head moved relative to the main part 12 during reading.

Owing to the possibility of reliably reading by mechanical means a large number of marks within a short time without the need for visually reading the marks, the marking seal embodying the invention is extremely suitable for those cases in which many marking seals have to be identified sequentially. An example thereof is the use as an ear mark on animals, which have to be correctly identified in slaughter houses within a short time. Other uses are, for example, on vessels, containers, postal bags and measuring apparatus.

The marking seal using a marking element having identification cavities may be designed in a different way. For example, instead of using a bracket 2, separate disposition of the counter-element and the marking seal may be advantageously used. In the case of the separate disposition the fixing pin is the sole connection, when the marking seal is closed, between the counter-element and the sealing member.

CLAIMS :

1.       A marking seal for marking objects, comprising a seal member (1) having a plate-shaped marking element (12) provided with at least one visually readable mark depressed with respect to the surface, characterized in that the marking element (12) has a plurality of identification cavities (31) arranged in the form of a matrix, said matrix of identification cavities (31) being characteristic of the mark concerned which can be mechanically read by means of a reading member.

2.       A marking seal as claimed in Claim 1, characterized in that the mark consists of a plurality of line parts in which the identification cavities (31) are provided.

3.       A marking seal as claimed in Claim 1 or 2, characterized in that each identification cavity is filled with lacquer (33).

4.       A marking seal as claimed in Claim 2 or 3, characterized in that the identification cavities (31) extend in the marking element (12) from the surface over a larger depth than the line parts (30).

5.       A marking seal as claimed in Claim 4, characterized in that the bottom of each identification cavity (31) is provided with a substance (32) contrasting to the surface of the marking element and/or being reflecting.

6.       A marking seal as claimed in Claim 4, characterized in that the bottom of each identification cavity (31) is provided with a magnetically orientated substance.

7.       A marking seal as claimed in anyone of the preceding Claims, characterized in that the identification cavities (31) are arranged in a 3 x 5 matrix.

0176120

1/1

FIG. 1

FIG. 2

FIG. 3

FIG.2A

HN 2

European Patent
Office

**EUROPEAN SEARCH REPORT**

0176120
Application number

EP 85 20 1317

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y,D | NL-A-8 104 082 (DAWSONVILLE CORPORATION N.V.) <br> * Claim 1; figures 1-3 * | 1 | A 01 K 11/00 <br> G 09 F 3/03 <br> G 06 K 19/08 |
| Y | GB-A-1 441 366 (NORBERT GOLDSTERN) <br> * Claims 1-2,5; page 2, lines 75-90; figure * | 1 | |
| A | | 2,7 | |
| A | EP-A-0 095 930 (ALLFLEX INT. LTD.) <br> * Claims 1-4,7; figures 1-3 * | 2 | |
| A | DE-B-2 817 118 (PHÖNIX ELEKTRIZITÄTSGESELLSCHAFT H.KNÜMANN & CO.) <br> * Claims 1-2; column 4, lines 19-50; figure * | 3 | TECHNICAL FIELDS SEARCHED (Int. Cl 4) |
| A | US-A-3 787 839 (MINNESOTA MINING AND MANUFACTURING CO.) <br> * Claims 1,3-4; column 9, line 63 - column 10, line 2; figures 10-11 * | 1,6 | G 09 F <br> A 01 K <br> G 06 K |
| A | FR-A-2 271 019 (ALLIBERT-EXPLOITATION) <br> * Claims 1,3; page 3, lines 10-22; figures 1-3 * | 4 | |
| | --- -/- | | |

The present search report has been drawn up for all claims

| Place of search | Date of completion of the search | Examiner |
|---|---|---|
| THE HAGUE | 12-12-1985 | FRANSEN L.J.L. |

| Category | Citation of document with indication, where appropriate, of relevant passages | Relevant to claim | CLASSIFICATION OF THE APPLICATION (Int Cl 4) |
|---|---|---|---|
| A | FR-A-2 258 787 (PHILIPPUS POPE KIESTRA)<br>* Page 5, line 26 - page 6, line 10; figure 1 *<br><br>- - - - - | 1,4,6 | |

## DOCUMENTS CONSIDERED TO BE RELEVANT — Page 2

TECHNICAL FIELDS SEARCHED (Int Cl 4)

The present search report has been drawn up for all claims

| Place of search | Date of completion of the search | Examiner |
|---|---|---|
| THE HAGUE | 12-12-1985 | FRANSEN L.J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82